# EUROPEAN PATENT APPLICATION

(11) **EP 2 337 412 A1**
(43) Date of publication of application: **22.06.2011**
(21) Application number: 09815634.2
(22) Date of filing: 28.09.2009
(51) Int. Cl.: H04W 72/00

(54) **METHOD, EQUIPMENT AND SYSTEM FOR MAPPING THE ACCESS POINT TO THE CELL**

(30) Priority: 28.09.2008 CN 200810216617
(71) Applicant: Huawei Technologies Co., Ltd., Shenzhen, Guangdong 518129 (CN)
(72) Inventor: REN, Xiaotao c/o Huawei Technologies Co., Ltd. Int.Prop.Dept., Shenzhen (CN)
(74) Representative: Kreuz, Georg Maria
(86) International application number: PCT/CN2009/074282
(87) International publication number: WO 2010/034265

(57) **Abstract**

A method for mapping Access Points (APs) to cells includes: allocating multiple carriers to one AP if the AP serves different User Equipments (UEs) located in a same cell or different cells; and setting up a mapping relation between the AP, the multiple carriers, and the cells for the AP, so as to map the AP to the same cell or different cells through the multiple carriers. In the embodiments of the present invention, the APs in different cells serve the same UE based on the same carrier, which is equivalent to converting inter-cell coordination into intra-cell coordination, thus reducing signaling overheads and simplifying the Coordinated Multi-Point (CoMP) transmitting and CoMP receiving.

## Description

This application claims priority to Chinese Patent Application No. 200810216617.1, filed with the Chinese Patent Office on September 28, 2008 and entitled "Method, Apparatus and System for Mapping Access Points to Cells", which is incorporated herein by reference in its entirety.

### FIELD OF THE INVENTION

The present invention relates to wireless communication technologies, and in particular, to a method, an apparatus, and a system for mapping an Access Point (AP) to a cell in a mobile communication system.

### BACKGROUND OF THE INVENTION

As a substitute for the 3^{rd} Generation (3G) mobile communication systems such as a Wideband Code Division Multiple Access (WCDMA) system and the post-3G mobile communication systems such as a Long Term Evolution Release 8 (LTE R8) system and an Ultra Mobile Broadband (UMB) system, the 4^{h} Generation (4G) mobile communication system provides higher peak user throughput, average user throughput, and edge user throughput, and enables users to have a better experience in data transmission. Coordinated Multi-Point (CoMP) transmission is one of the key technologies of the 4G mobile communication system, and is irreplaceable in enhancing spectrum efficiency.

CoMP transmission means that multiple geographically separated Access Points (APs) provide data transmission services for one or more user terminals simultaneously. An AP is a physical node, which includes at least one or more antenna units located in a same geographic position, where the antenna units have the same large-scale fading. When multiple APs exist in a system, the APs may belong to a same base station or different base stations.

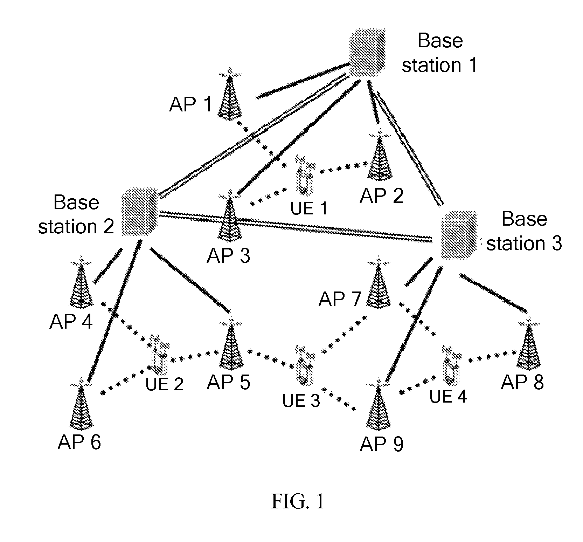

As shown in FIG. 1, if multiple APs serving one or more user terminals simultaneously belong to a same base station (for example, User Equipment (UE) 1 is connected to base station 1 through AP 1, AP 2, and AP 3), and, if a low-delay and large-capacity connection (such as a fiber connection, indicated by a single solid line in FIG. 1) exists between each AP and the base station, these APs can share data with the base station through the low-delay and large-capacity connection. Moreover, the base station can send real-time control commands, such as an interference coordination instruction and resource allocation signaling, to each AP through the low-delay and large-capacity connection, thus finishing downlink dynamic CoMP transmitting and uplink dynamic CoMP receiving.

If multiple APs serving one or more user terminals simultaneously belong to different base stations (for example, AP 5 serving UE 3 belongs to base station 2, and AP 7 and AP 9 serving UE 3 belong to base station 3), real-time data sharing cannot be realized between base stations due to the limitation on the interface between base stations (generally, only high-delay and small-capacity interfaces exist between base stations, such as the X2 interface indicated by a double solid line in FIG. 1). In this case, dynamic coordination is hardly achievable, but static or semi-static coordinated scheduling and interference management, for example, coordinated beam shaping, are still practicable.

In the relevant CoMP transmission technologies, the user terminal signals at the edge of a cell undergo large-scale fading, and the desired signals fade seriously; and strong interference existing between cells reduces the data rate of the user terminals at the edge of the cell. To solve such problems, an AP selection method centered on a UE is applied, which requires scheduling coordination and/or coordinated data transmission between multiple cells.

The prior art has the following disadvantages: In the scheduling coordination involving multiple cells, the inter-cell scheduling coordination requires more signaling overheads than intra-cell scheduling coordination; and CoMP uplink receiving between cells is more complicated than CoMP uplink receiving within an cell, which leads to more complexity of the transmitting/receiving processing, more power consumption and more costs.

### SUMMARY OF THE INVENTION

The present invention provides a method, an apparatus, and a system for mapping an AP to a cell.

According to the first aspect of the present invention a Coordinated Multi-Point (CoMP) transmission method includes: setting up mapping relations between access points (APs), carriers and cells; storing the mapping relations between the APs, carriers and cells; and performing CoMP transmission according to the mapping relations.

According to the second aspect of the present invention a base station includes: a mapping apparatus, configured to map an Access Point (AP) to a cell and set up mapping relations; and a storing unit, configured to store the mapping relation set up by the mapping apparatus.

According to the third aspect of the present invention an access point (AP) includes: a unit for obtaining a mapping relation between the AP, carriers allocated to the AP, and cells served by the AP; and a unit for serving multiple user equipments (UEs) through the carriers respectively according to the mapping relation.

According to the fourth aspect of the present invention a communication system includes: a base station provided in the foregoing embodiment.

According to the present invention, the APs in different cells serve the same UE based on the same carrier, which is equivalent to converting inter-cell coordination into intra-cell coordination, thus reducing the signaling overhead and simplifying the CoMP transmitting and CoMP receiving.

### BRIEF DESCRIPTION OF THE DRAWINGS

FIG. 1 is a schematic diagram showing a framework of a CoMP transmission system in the prior art;
FIG. 2 is a schematic diagram showing CoMP transmission under a same base station according to an embodiment of the present invention;
FIG. 3 is a schematic diagram showing CoMP transmission under different base stations according to an embodiment of the present invention;
FIG. 4 is a schematic diagram showing a flowchart of a method for mapping, in a multi-carrier system, APs to cells according to an embodiment of the present invention;
FIG. 5 is a schematic diagram showing a flowchart of a method for mapping, in a multi-carrier system, APs to cells according to another embodiment of the present invention;
FIG. 6 is a schematic diagram showing a flowchart of a CoMP transmission method in a multi-carrier system according to an embodiment of the present invention;
FIG. 7 is a schematic diagram showing a mapping apparatus for mapping, in a multi-carrier system, APs to cells according to an embodiment of the present invention; and
FIG. 8 is a schematic diagram showing a base station according to an embodiment of the present invention.

### DETAILED DESCRIPTION OF THE EMBODIMENTS

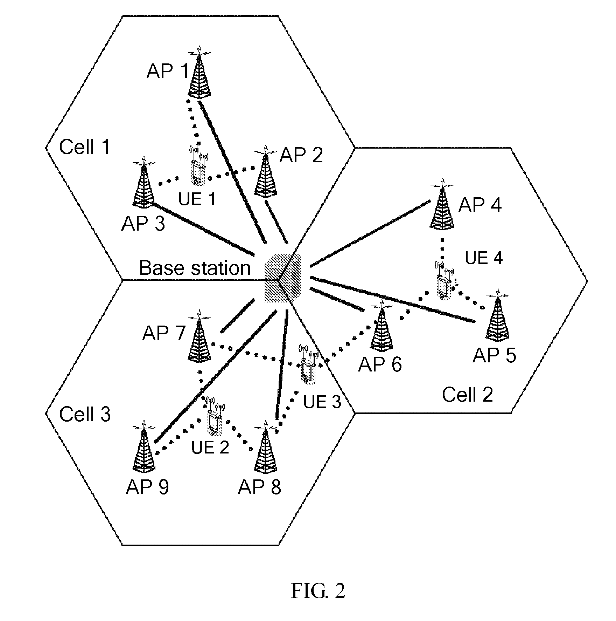

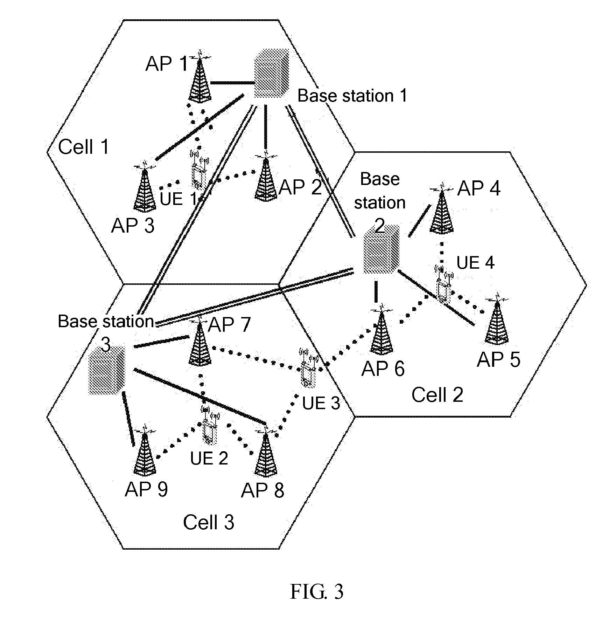

Analyzing the prior art revealed that during the scheduling coordination and/or coordinated data transmission between multiple cells, the cells may be different cells under the same base station (for example, in FIG. 2, AP 6 serving UE 3 belongs to cell 2, AP 7 and AP 8 serving UE 3 belong to cell 3, and cell 2 and cell 3 correspond to the same base station); or, the cells may be different cells under different base stations (for example, in FIG. 3, AP 6 serving UE 3 belongs to cell 2 which corresponds to base station 2, but AP 7 and AP 8 serving UE 3 belong to cell 3 which corresponds to base station 3).

In the prior art, during scheduling coordination between multiple cells, the APs from different cells serve one UE, and because the APs of different cells have different cell identities (IDs), the downlink control channel (such as the Physical Downlink Control Channel (PDCCH) in the 3GPP LTE specifications) delivered to the UE needs to carry scheduling signaling of different cell IDs, a pre-coding matrix indication, and a modulation coding indication, which bring many signaling overheads.

In the prior art, during CoMP receiving between uplink cells, an AP needs to detect uplink signals that have the basic sequence of the cell to which the AP belongs. As shown in FIG. 2, AP 6, AP 7 and AP 8 perform uplink coordinated receiving of UE 3, and AP 6 belongs to cell 3. To perform uplink coordinated receiving of UE 3, AP 6 needs to detect the uplink signals that have the basic sequence of cell 3, so as to receive uplink signals of UE 3. Meanwhile, AP 6 serves UE 4, and AP 6 belongs to cell 2. Therefore, AP 6 needs to detect the uplink signals that have the basic sequence of cell 2, so as to receive uplink signals of UE 4. Consequently, in the CoMP receiving, the transmitting/receiving processing is more complicated, which increases power consumption and costs.

The embodiments of the present invention are detailed below with reference to accompanying drawings.

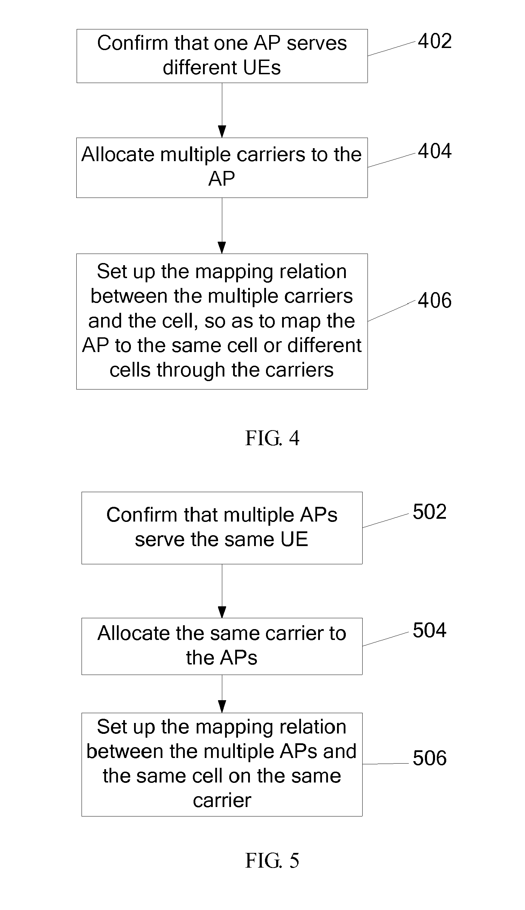

As shown in FIG. 4, a method for mapping, in a multi-carrier system, APs to cells according to an embodiment of the present invention is applicable to not only an Orthogonal Frequency Division Multiple Access (OFDMA) system, but also a Code Division Multiple Access (CDMA) system, a Time Division Multiple Access (TDMA) system, and other mobile communication systems. The method includes the following steps:
Step 402: Confirm that an AP serves different UEs.

The different UEs may be located in different cells or in a same cell.

Although the following description is given with reference to FIG. 2, the method may also be described with reference to FIG. 3. As shown in FIG. 2, the system confirms that AP 6 serves UE 3 and UE 4; UE 3 is located in cell 3, and UE 4 is located in cell 2; or, the system confirms that AP 7 serves UE 2 and UE 3 located in cell 3.

Step 404: Allocate multiple carriers to the AP.

In FIG. 2, because AP 6 serves UE 3 and UE 4, two carriers (supposing that the two carriers are carrier 1 and carrier 2) are allocated to AP 6, where carrier 1 serves UE 4, and carrier 2 serves UE 3. In practice, if AP 6 further serves UEs located in other cells besides cell 2 and cell 3, more carriers (such as carrier 3 different from carrier 1 and carrier 2) need to be allocated to AP 6.

Alternatively, because AP 7 serves UE2 and UE 3 located in cell 3, two carriers (supposing that the two carriers are carrier 2 and carrier 4) are allocated to AP 7, where carrier 2 serves UE 3, and carrier 4 serves UE2.

Step 406: Set up a carrier-cell mapping relation for the AP, so as to map the AP to the same cell or different cells through the allocated carriers.

Because different cells have different cell IDs, the step of setting up a carrier-cell mapping relation may specifically include: setting up a mapping relation between a carrier and a cell ID. In this embodiment, for AP 6, the mapping relation includes the mapping relation between carrier 1 and the ID of cell 2, and the mapping relation between carrier 2 and the ID of cell 3; for AP 7, the mapping relation includes the mapping relation between carrier 2 and the ID of cell 3, and the mapping relation between carrier 4 and the ID of cell 3.

To map the AP to the same cell or different cells through different carriers, a channel corresponding to a cell may be set up on a carrier. The cell or different cells may be the cell(s) in which multiple UEs served by the AP are located. If the UEs are located in different cells, the AP may be mapped to different cells; if the UEs are located in a same cell, the AP may be mapped to the same cell. For example, to map AP 6 to two different cells through carrier 1 and carrier 2, for AP 6, a channel corresponding to cell 2 (or the ID of cell 2) is set up on carrier 1, and a channel corresponding to cell 3 (or the ID of cell 3) is set up on carrier 2. In this way, on carrier 1, AP 6 is mapped to cell 2; meanwhile, on carrier 2, AP 6 is mapped to cell 3. That is, AP 6 is mapped to two cells (cell 2 and cell 3).

The channel set up on a carrier and corresponding to a cell (or the ID of the cell) may be a downlink control channel or an uplink control channel, or other channels such as a broadcast channel or a synchronization channel.

In addition, after step 406, the method may further includes: storing the mapping relation between the AP, multiple carriers allocated to the AP, and the cell; or storing the mapping relation between the AP, multiple carriers allocated to the AP, and different cells.

If the mapping relation is stored in the base station to which the AP belongs, mapping relations stored by a base station and other base stations may be exchanged. For example, through an X2 interface between base stations, a base station sends mapping relation stored locally to other base stations, and receives mapping relation sent by other base stations.

FIG. 4 shows an example of mapping an AP to a same cell or to different cells. In practice, there are usually multiple APs, and more than one AP serves a cell. Therefore, the foregoing process may be repeated to set up a carrier-cell mapping relation for each AP respectively. For example, a carrier-cell mapping relation is set up for each AP in turn. In this way, the mapping relation between the AP, the carrier and the cell is set up. Persons of ordinary skill in the art understand that, it is possible that the same carrier is allocated to different APs according to the method provided herein. For example, in FIG. 2, carrier 2 is allocated to AP 6, and, on carrier 2, AP 6 corresponds to cell 3; carrier 2 is allocated to AP 7, and, on carrier 2, AP 7 also corresponds to cell 3. Therefore, for one carrier, different APs may be mapped to the same cell (or cell ID) through the carrier.

Alternatively, when a carrier is allocated to an AP, reference may be made to the carrier allocation information of other APs. If two or more APs serve the same UE, a common carrier may be allocated to these APs so that, on the common carrier, the APs correspond to the same cell. For example, in FIG. 2, it is assumed that carrier 2 is already allocated to AP 6, and that, on carrier 2, AP 6 corresponds to cell 3, because AP 7 and AP 6 serve the same UE (UE 3), a common carrier (such as carrier 2) already allocated to AP 6 may be also allocated to AP 7, and, on carrier 2, AP 7 also corresponds to cell 3.

In practice, there are usually multiple APs, and generally more than one AP serves a cell. Therefore, another method for mapping APs to cells according to an embodiment of the present invention includes: allocating multiple carriers to an AP if the AP serves different UEs located in the same cell or in different cells; and setting up a mapping relation between the AP, the multiple carriers, and the cells for the AP, so as to map the AP to the same cell or different cells through the multiple carriers. After the carrier-cell mapping relation is set up for the AP, if one or more other APs serve different UEs, similar steps may be performed to allocate carriers to other APs, and to set up a mapping relation between the AP, carriers and cells.

As shown in FIG. 5, a method for mapping, in a multi-carrier system, APs to cells according to another embodiment of the present invention includes the following steps:
Step 502: Confirm that multiple APs serve the same UE.

The multiple APs may be located in the same cell or located in at least two different cells.

As shown in FIG. 2, AP 6, AP 7 and AP 8 serve UE 3; AP 6 is located in cell 2, and AP 7 and AP 8 are located in cell 3; or, AP 7, AP 8 and AP 9 are all located in cell 3 and serve UE2.

Step 504: Allocate the same carrier to the multiple APs serving the same UE.

In a multi-carrier system, multiple carriers are available for being allocated to the AP. For example, carrier 2 is allocated to AP 6, AP 7 and AP 8; or carrier 4 is allocated to AP 7, AP 8 and AP 9.

Step 506: Set up, on the carrier, a mapping relation between the multiple APs and the same cell, so as to map different APs to the same cell through the carrier.

First, set up, on the carrier, a mapping relation between an AP and a cell, and then set up a mapping relation between each AP and this cell respectively. For example, set up the mapping relations in turn until the mapping relations between all APs serving this UE and the cell are set up on the carrier. The step of setting up a mapping relation between an AP and the cell includes: setting up, on the carrier, a channel corresponding to the cell (or cell ID) for an AP, where the channel may be a downlink control channel or an uplink control channel, or other channels such as a broadcast channel or a synchronization channel.

Specifically, the same cell may be the cell that in which the UE is located. For example, AP 6 is mapped, on carrier 2, to cell 3, and AP 7 and AP 8 are also mapped, on carrier 2, to cell 3, namely, cell 3 corresponds to AP 6, AP 7, and AP 8 through carrier 2.

Alternatively, AP 7, AP 8, and AP 9 are mapped, on carrier 4, to cell 3; and cell 3 corresponds to AP 7, AP 8, and AP 9 through carrier 4.

In addition, after step 506, the method may further include: storing the mapping relation between the carrier, the multiple APs and the same cell. If the mapping relation is stored in the base station to which the AP belongs, mapping relations stored in the base station and stored in other base stations may be exchanged. For example, through an X2 interface between base stations, a base station sends the mapping relations stored locally to other base stations, and receives the mapping relations sent by other base stations.

FIG. 5 shows an example of mapping different APs to the same cell. In a multi-carrier system, multiple carriers are available for allocation. Therefore, the foregoing process may be repeated to map different APs to the same cell on each carrier respectively, for example, map, on each carrier in turn, different APs to the same cell. Persons of ordinary skill in the art understand that, it is possible that different carriers are allocated to the same AP according to the method provided herein. For example, in FIG. 2, on carrier 1, AP 4, AP 5, and AP 6 correspond to cell 2; on carrier 2, AP 6, AP 7, and AP 8 correspond to cell 3. That is, carrier 1 and carrier 2 are allocated to AP 6. Through the foregoing operations, the mapping relation between the AP, the carrier and the cell is set up.

In addition, an embodiment of a present invention further provides a method for mapping APs to cells, where the method specifically includes: allocating the same carrier to multiple APs if the multiple APs serve one UE; and setting up, on the carrier, a mapping relation between the multiple APs, the carrier and the same cell, so as to map the multiple APs to the same cell through the carrier. After the AP-cell mapping relation is set up for a UE through a carrier, if one or more other UEs are served by multiple APs, similar steps may be performed to allocate carriers to the APs corresponding to other UEs (namely, the APs serving the UEs), and to set up a mapping relation between the AP, carriers and cells.

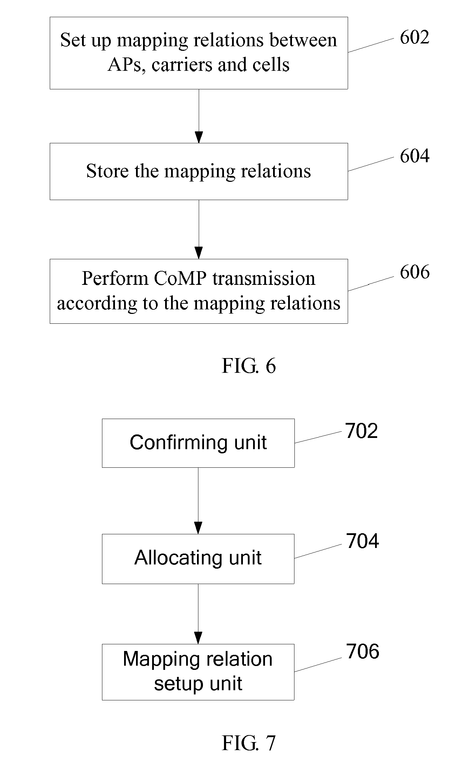

As shown in FIG. 6, a CoMP transmission method in a multi-carrier system is provided in an embodiment of the present invention. The method includes the following steps:
Step 602: Set up a mapping relation between an AP, a carrier and a cell (or a cell ID).

The mode of setting up the mapping relation may be: setting up an AP-to-cell ID mapping table corresponding to different carriers, as shown in FIG. 5; or setting up a cell ID-to-carrier mapping table corresponding to different APs, as shown in FIG. 4.

Step 604: Store the mapping relation between the AP, the carrier and the cell.

The mapping relation between the AP, the carrier and the cell needs to be stored after being set up through the foregoing operations. If multiple cells corresponding to an AP belong to the same base station, the mapping relation may be stored in this base station, for example, in an AP-to-cell ID mapping table corresponding to different carriers and/or a cell ID-to-carrier mapping table corresponding to different APs, or a cell ID-AP-carrier mapping table. If multiple cells corresponding to an AP belong to different base stations, each base station stores at least the mapping relation corresponding to the APs which exchange data with the base station, for example, stores an AP-to-cell ID mapping table corresponding to different carriers and/or a cell ID-to-carrier mapping table corresponding to different APs. Mapping relations stored on each base station need to be exchanged between the base stations through interfaces such as X2 or S 1.

Step 606: Perform CoMP transmission according to the mapping relation.

A channel (such as a downlink control channel) corresponding to the same cell may be set up on an AP based on different carriers according to the mapping relation between the AP, carrier, and cell. In this way, an AP can serve different UEs of the same cell through different carriers.

A channel (such as a downlink control channel) corresponding to different cells may be set on an AP based on different carriers according to the mapping relation between the AP, carrier, and cell. In this way, an AP can serve UEs of different cells through different carriers.

It should be pointed out that, as regards multiple APs serving the same UE, no matter whether the APs are located in the same cell or in least two different cells, the method illustrated in FIG. 4 is as effective as the method illustrated in FIG. 5 in allocating the same carrier to these APs. Therefore, by mapping the APs to the same cell through the same carrier, the method enables the APs to serve the UE through the same carrier. As shown in FIG. 2, AP 6, AP 7 and AP 8 serve UE 3; AP 6 is located in cell 2, and AP 7 and AP 8 are located in cell 3. Therefore, carrier 2 may be allocated to AP 6, AP 7 and AP 8. In this way, the APs serving UE 3 are AP 6, AP 7 and AP 8 on carrier 2.

Through the method provided herein, the APs in different cells serve the same UE based on the same carrier, which is equivalent to converting inter-cell coordination into intra-cell coordination, thus reducing signaling overheads and simplifying the CoMP transmitting and CoMP receiving.

As shown in FIG. 7, a mapping apparatus for mapping, in a multi-carrier system, APs to cells is provided in an embodiment of the present invention. The mapping apparatus includes: a confirming unit 702, an allocating unit 704, and a mapping relation setup unit 706.

The confirming unit 702 is configured to confirm that one AP serves different UEs. For example, in the system shown in FIG. 2, the confirming unit 702 confirms that AP 6 serves UE 3 and UE 4, where UE 3 is located in cell 3, and UE 4 is located in cell 2.

The allocating unit 704 is configured to allocate multiple carriers to the AP. For example, the allocating unit 704 allocates two carriers (carrier 1 and carrier 2) to AP 6.

The mapping relation setup unit 706 is configured to set up a mapping relation between the carrier and the cell, and map the AP to the same cell or different cells through the multiple carriers.

When different UEs are located in the same cell, the mapping relation setup unit 706 maps the AP to the same cell through different carriers; or, when different UEs are located in different cells, the mapping relation setup unit 706 maps the AP to different cells through different carriers.

For example, if AP 6 serves UE 3 and UE 4, UE 3 is located in cell 3, and UE 4 is located in cell 2, the mapping relation setup unit 706 maps AP 6 to cell 2 (serving UE 4) through carrier 1, and maps AP 6 to cell 3 (serving UE 3) through carrier 2; if the AP serves UE 3 and UE2 of the same cell, the mapping relation setup unit 706 maps AP 7 to cell 3 (serving UE 3) through carrier 2, and maps AP 7 to cell 3 (serving UE2) through carrier 4.

In another optional embodiment,
the confirming unit 702 is configured to confirm that multiple APs serve the same UE, for example, in the system shown in FIG. 2, the confirming unit 702 confirms that AP 6, AP 7, and AP 8 serve UE 3.

The allocating unit 704 is configured to allocate the same carrier to the multiple APs. For example, the allocating unit 704 allocates carrier 2 to AP 6, AP 7, and AP 8.

The mapping relation setup unit 706 is configured to set up, on the carrier, a mapping relation between the multiple APs and the same cell. For example, the mapping relation setup unit 706 maps, on carrier 2, AP 6 to cell 3, and also maps, on carrier 2, AP 7 and AP 8 to cell 3.

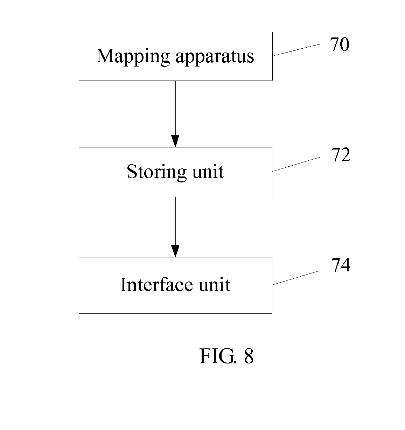

As shown in FIG. 8, a base station is provided in an embodiment of the present invention. The base station is applicable to a multi-carrier system. The base station includes a mapping apparatus 70 and a storing unit 72.

As shown in FIG. 7, the mapping apparatus 70 in this embodiment is configured to set up a mapping relation between the AP located in the base station, the carrier, and the cell in the multi-carrier system.

The storing unit 72 is configured to store the mapping relation between the AP under the base station, the carrier and the cell.

The base station may further include: an interface unit 74, configured to: exchange mapping relations with another base station, send the mapping relations stored in the storing unit 72 to another base station, and receive the mapping relations sent by another base station. Specifically, the interface unit 74 exchanges mapping relations with the interface unit in another base station through interfaces such as X2 or S 1.

The storing unit 72 further stores the mapping relations received from another base station.

An AP provided in an embodiment of the present invention may include: a unit for obtaining a mapping relation between the AP, carriers allocated to the AP, and cells served by the AP; and a unit for serving multiple UEs through the carriers respectively according to the mapping relation.

The AP may further include a storing subunit, which is configured to store the mapping relation between the AP, carriers allocated to the AP, and cells served by the AP.

A multi-carrier system is provided in an embodiment of the present invention. The multi-carrier system includes at least one base station and multiple APs. Each base station covers one or more cells, and the multiple APs are located in the same cell or different cells.

Each base station may include: a mapping apparatus for setting up the mapping relation between the AP under the base station, the carrier and the cell; and a storing unit for storing the mapping relation; or
each base station may include a mapping apparatus for setting up a mapping relation, and each AP includes a storing subunit, which is configured to store the mapping relation between the AP, carriers allocated to the AP, and cells served by the AP. In this case, multiple storing subunits are equivalent to the storing unit in the base station.

It is understandable that the mapping apparatus and storing unit may be stand-alone entities separated from the base station, or may be integrated together.

In practice, the mapping apparatus may select a base station, set up a mapping relation between multiple APs under the base station, carriers allocated to the APs, and cells served by the APs, and store the mapping relation into the base station. After the mapping relation is set up, the multiple APs perform CoMP transmission according to the mapping relation.

For example, in FIG. 2, the multi-carrier system includes a base station and multiple APs. The APs are located in three cells covered by the base station. The base station allocates carriers to the APs, and sets up the mapping relation between the APs, allocated carriers, and the three cells, including the mapping relation between AP 6, carrier 2, and cell 3, and the mapping relation between AP 7, carrier 2, and cell 3. The multiple APs perform CoMP transmission according to the mapping relations set up by the base station. For example, AP 6 and AP 7 serve, on carrier 2, UE 3 in cell 3 according to the mapping relation.

In this embodiment, the APs in different cells serve the same UE based on the same carrier, which is equivalent to converting inter-cell coordination into intra-cell coordination, thus reducing signaling overheads and simplifying the CoMP transmitting and CoMP receiving.

According to the descriptions above, those skilled in the art understand that the present invention may be implemented by hardware only, or preferably in most circumstances, by software and a necessary universal hardware platform. Therefore, the essence or novelty of the technical solution under the present invention may be embodied in a software product. The software product is stored in computer-readable storage media, and incorporates several instructions for instructing a device to execute the method specified in any embodiment of the present invention.

The above descriptions are merely exemplary embodiments of the present invention, but not intended to limit the present invention.

## Claims

1. A method for mapping an Access Point (AP) to a cell, comprising:
allocating (404) multiple carriers to an AP if the AP serves different User Equipments, UEs, located in a same cell or different cells; and
setting up (406) a mapping relation between the AP, the multiple carriers, and the cell(s) for the AP, so as to map the AP to the same cell or the different cells through the multiple carriers.

2. The method according to claim 1, wherein:
the step of setting up the mapping relation between the AP, the multiple carriers and the cells comprises:
setting up mapping relations between the multiple carriers and cell identifier (ID) or IDs.

3. The method according to claim 2, wherein:
the step of setting up (406) the mapping relations between the multiple carriers and cell ID(s) comprises:
setting up, on a carrier, a channel corresponding to a cell ID.

4. The method according to claim 3, wherein:
the channel is a downlink control channel, or an uplink control channel, or a broadcast channel, or a synchronization channel.

5. The method according to any one of claims 1-4, further comprising:
if one or more other APs serve different UEs, allocating carriers to the one or more other APs, and setting up mapping relations between the APs, carriers, and cell(s).

6. The method according to claim 1, further comprising:
storing the mapping relations between the APs, the multiple carriers allocated to the APs, and the same cell; or
storing the mapping relations between the APs, the multiple carriers allocated to the APs, and the different cells.

7. The method according to claim 6, wherein:
the mapping relations are stored in a base station that covers the AP, and the method further comprises:
exchanging mapping relations between an base station and another base station.

8. A method for mapping an Access Point (AP) to a cell, comprising:allocating (504) a same carrier to multiple APs if the multiple APs serve one User Equipment ,UE; and
setting up (506), on the carrier, a mapping relation between the multiple APs, the same carrier and a same cell, so as to map the multiple APs to the same cell through the carrier.

9. The method according to claim 8, wherein:
the step of setting up (506), on the carrier, the mapping relation between the multiple APs, the carrier, and the same cell comprises:
setting up, on the carrier, a channel corresponding to an identity, ID, of the cell for the multiple APs.

10. The method according to claim 8 or 9, wherein:
the same cell is the cell in which the UE is located.

11. The method according to claim 8 or 9, further comprising:
if one or more other UEs are served by the multiple APs, allocating carriers to the one or more other UEs, and setting up mapping relations between the APs, carriers, and cell(s).

12. The method according to claim 8, further comprising:
storing the mapping relations between the same carrier, the multiple APs, and the same cell.

13. A Coordinated Multi-Point (CoMP) transmission method, comprising:
setting up mapping relations between Access Points (APs), carriers, and cells according to the method specified in any one of claims 8-12; and
performing CoMP transmission according to the mapping relations.

14. A mapping apparatus for mapping an Access Point (AP) to a cell, comprising:
a confirming unit (702), configured to confirm that an AP serves different User Equipments, UEs, located in a same cell or different cells;
an allocating unit (704), configured to allocate multiple carriers to the AP; and
a mapping relation setup unit (706), configured to map the AP to the same cell or the different cells through the multiple carriers.

15. The mapping apparatus according to claim 14, wherein:
the mapping relation setup unit (706) is further configured to map the AP to the same cell through the multiple carriers if the different UEs are located in the same cell; or
the mapping relation setup unit (706) is further configured to the map the AP to the different cells through the multiple carriers if the different UEs are located in the different cells.

16. A mapping apparatus for mapping an Access Point (AP) to a cell, comprising:
a confirming unit, configured to confirm that multiple APs serve a same User Equipment ,UE;
an allocating unit, configured to allocate a same carrier to the multiple APs; and
a mapping relation setup unit, configured to set up, on the carrier, a mapping relation between the multiple APs and the same cell.

17. A base station, comprising:
the mapping apparatus specified in any one of claims 14-16; and
a storing unit, configured to store mapping relations set up by the mapping apparatus.

18. The base station according to claim 17, wherein the mapping relations comprise:
mapping relations between Access Points (APs) under the base station, carriers and cells.

19. The base station according to claim 17 or 18, further comprising:
an interface unit (74), configured to send the mapping relations stored in the storing unit to another base station, and receive mapping relations sent by said another base station.

20. An Access Point, AP, comprising:
a unit for obtaining a mapping relation between the AP, carriers allocated to the AP, and cells served by the AP; and
a unit for serving multiple User Equipments, UEs through the carriers respectively according to the mapping relation.

21. The AP according to claim 20, further comprising:
a storing subunit for storing the mapping relation.

22. A communication system, comprising:
a base station for performing wireless communication;
a mapping apparatus for setting up mapping relations;
a storing unit for storing the mapping relations; and
multiple Access Points (APs) for performing Coordinated Multi-Point (CoMP) transmission according to the mapping relations stored in the storing unit.

23. The communication system according to claim 22, wherein:
the mapping apparatus and the storing unit are integrated in the base station.

24. The communication system according to claim 22, wherein:
the storing unit comprises multiple storing subunits, one of which is integrated into each AP; and
the mapping apparatus is integrated in the base station.
